## Europäisches Patentamt

## European Patent Office

## Office européen des brevets

(19)

(11) Veröffentlichungsnummer: **0 121 204**
**B1**

(12) # EUROPÄISCHE PATENTSCHRIFT

(45) Veröffentlichungstag der Patentschrift:
**26.08.87**

(51) Int. Cl.⁴: **G 21 C 3/20**, B 32 B 15/01

(21) Anmeldenummer: **84103288.1**

(22) Anmeldetag: **24.03.84**

(54) **Brennstab für einen Kernreaktor.**

(30) Priorität: **30.03.83 SE 8301770**

(43) Veröffentlichungstag der Anmeldung:
**10.10.84 Patentblatt 84/41**

(45) Bekanntmachung des Hinweises auf die Patenterteilung:
**26.08.87 Patentblatt 87/35**

(84) Benannte Vertragsstaaten:
**BE CH DE FR GB LI**

(56) Entgegenhaltungen:
**DE - A - 1 639 249**
**DE - A - 3 124 935**
**FR - A - 2 290 738**
**FR - A - 2 399 713**
**FR - A - 2 404 898**
**GB - A - 1 091 154**

(73) Patentinhaber: **AB ASEA-ATOM, S-721 83 Västeras (SE)**

(72) Erfinder: **Lundblad Vannesjö, Katarina, Rödinggatan 8, S-723 48 Västeras (SE)**

(74) Vertreter: **Boecker, Joachim, Dr.-Ing., Rathenauplatz 2-8, D-6000 Frankfurt a.M. 1 (DE)**

ACTORUM AG

## Beschreibung

Die vorliegende Erfindung betrifft einen Brennstab für einen Kernreaktor gemäss dem Oberbegriff des Anspruchs 1.

Als Hülle für den Brennstoff in Kernreaktoren werden normalerweise dünnwandige Rohre aus auf Zirkonium basierenden Legierungen verwendet, die unter dem Handelsnamen Zircaloy bekannt sind. Diese Legierungen enthalten Legierungssubstanzen wie Zinn, Eisen, Nickel, Chrom und Sauerstoff. Die Legierungen verhärten durch die Neutronenbestrahlung, was zu einer Versprödung des Materials und zu einer erheblich erhöhten Anfälligkeit für durch Spannungskorrosion bedingte Stabschäden führt. Um einer solchen Entwicklung entgegenzuwirken, ist es bekannt, die Brennstoffhülle auf der Innenseite mit einer Schicht aus Zirkonium zu versehen. Zirkonium eignet sich für diesen Zweck deshalb, weil es einerseits eine hohe Resistenz gegen Verhärtung durch Neutronenbestrahlung hat und andererseits ein verhältnismässig weiches Material ist. Eine Zirkoniumschicht auf der Innenseite der Brennstoffhülle ist daher plastisch verformbar, so dass sie die Brennstoffhülle gegen Beanspruchungen schützen kann, die bei Leistungsänderungen während des Betriebes auftreten.

Gemäss der DE-A 2 842 198 wird für die innenseitige Schicht Zirkonium mit einem Verunreinigungsgehalt von mindestens 1000 ppm (parts per million) und höchstens 5000 ppm verwendet. Von den Verunreinigungen sind dabei 200–1200 ppm Sauerstoff, was dem Gehalt an Sauerstoff in kommerziellem Zirkoniumschwamm von Reaktorqualität entspricht. Die Gehalte an anderen Verunreinigungen liegen innerhalb der normalen Grenzen für die betreffenden Substanzen in kommerziellem Zirkoniumschwamm von Reaktorqualität, was für Aluminium 75 ppm oder weniger, für Bor 0,4 ppm oder weniger, für Kadmium 0,4 ppm oder weniger, für Kohlenstoff 270 ppm oder weniger, für Chrom 200 ppm oder weniger, für Kobalt 20 ppm oder weniger, für Kupfer 50 ppm oder weniger, für Hafnium 100 ppm oder weniger, für Wasserstoff 25 ppm oder weniger, für Eisen 1500 ppm oder weniger, für Magnesium 20 ppm oder weniger, für Mangan 50 ppm oder weniger, für Molybdän 50 ppm oder weniger, für Nickel 70 ppm oder weniger, für Niob 100 ppm oder weniger, für Stickstoff 80 ppm oder weniger, für Silizium 120 ppm oder weniger, für Zinn 50 ppm oder weniger, für Wolfram 100 ppm oder weniger, für Titan 50 ppm oder weniger und für Uran 3,5 ppm oder weniger bedeutet.

Gemäss der DE-A 2 550 029 wird für die innere Schicht Zirkonium mit einem Verunreinigungsgehalt von weniger als 1000 ppm, vorzugsweise von weniger als 500 ppm, verwendet. Von den Verunreinigungen wird der Sauerstoffgehalt auf einem Wert unter ca. 200 ppm gehalten.

Durch die DE-A 3 124 935 ist es bekannt, für die innere Schicht Zirkonium zu verwenden, das 0,1–3 Gew.% Molybdän und/oder 0,03–1 Gew.% Kohlenstoff und/oder 0,03–1 Gew.% Phosphor und/oder 0,03–1 Gew.% Silizium enthält. Das Zirkonium kann dabei ausserdem die oben genannten anderen in kommerziellem Zirkoniumschwamm von Reaktorqualität vorhandenen Verunreinigungen enthalten. Es wird angenommen, dass bei den Zusätzen von Molybdän, Kohlenstoff, Phosphor oder Silizium in der letztgenannten Druckschrift stabile Phasen ausgeschieden werden, wie beispielsweise intermetallische Verbindungen, Karbide, Phosphide und Silizide, in Form von freien Partikeln im Zirkoniumgrundgitter. Diese Ausscheidungen sollen das Kornwachstum bei der Herstellung des Rohres verhindern, so dass das Gefüge des Zirkoniums feinkörniger wird als wenn keine Zusätze vorhanden wären. Dieses feinkörnigere Gefüge soll der Grund für die grössere Resistenz gegen Spannungskorrosion sein.

Um eine gute Resistenz gegen Spannungskorrosion zu erreichen, ist man also bisher davon ausgegangen, dass entweder der Gehalt an Fremdsubstanzen im Zirkonium auf einem sehr niedrigen Niveau gehalten werden muss, oder dass derartige Zusätze von Fremdsubstanzen so vorgenommen werden müssen, dass eine Ausscheidung stabiler Verbindungen in Form freier Partikel im Zirkoniumgrundgitter stattfindet.

Der Erfindung liegt die Aufgabe zugrunde, einen Brennstab der eingangs genannten Art zu entwickeln, bei dem auf andere Weise eine hohe Resistenz gegen Spannungskorrosion und gleichzeitig eine hohe Resistenz gegen korrosive Angriffe von sehr heissem Wasser und Wasserdampf erreicht wird.

Zur Lösung dieser Aufgabe wird ein Brennstab gemäss dem Oberbegriff des Anspruches 1 vorgeschlagen, welcher erfindungsgemäss die im kennzeichnenden Teil des Anspruches 1 genannten Merkmale hat.

Vorteilhafte Ausgestaltungen der Erfindung sind in den weiteren Ansprüchen genannt.

Gemäss der Erfindung wird eine hohe Resistenz gegen Spannungskorrosion durch verhältnismässig hohe Gehalte von Zinn erzielt, obwohl Zinn keine Ausscheidung von freien Partikeln in dem Zirkoniumgrundgitter bewirkt, sondern sich im Zirkonium löst. Von besonderer Bedeutung ist es, dass der Zusatz von Zinn in verhältnismässig hohen Anteilen dem Zirkonium eine grössere Resistenz gegen korrosive Angriffe durch Wasser und Wasserdampf bei hohen Temperaturen verleiht. Dies hat eine langsamere Bildung von Korrosionswasserstoff zur Folge, so dass sich keine hohen Gehalte von Wasserstoff aufbauen können, durch welchen die mechanischen Eigenschaften der Brennstoffhülle durch lokale Hydrierung verschlechtert werden können.

Gemäss der Erfindung enthält die im wesentlichen aus Zirkonium bestehende Schicht auf der Innenseite der Brennstoffhülle 0,1–1 Gew.% Zinn. Der Gesamtgehalt der übrigen im Zirkonium enthaltenen Fremdsubstanzen liegt unter 0,5 Gew.%. Diese Fremdsubstanzen bestehen aus in Zirkoniumschwamm von Reaktorqualität üblicherweise vorkommenden Verunreinigungen mit den weiter oben bereits genannten Gehalten.

Die Dicke der im wesentlichen aus Zirkonium bestehenden Schicht kann 0,005-0,8 mm betragen; sie beträgt zweckmässigerweise 0,04-0,32 mm und vorzugsweise 0,05-0,1 mm. Die Dicke der Schicht beträgt zweckmässigerweise 5-40%, vorzugsweise 5-15% der Wandstärke der Brennstoffhülle.

Die auf Zirkonium basierende Legierung, auf deren Innenseite die im wesentlichen aus Zirkonium bestehende Schicht aufgebracht ist, besteht vorzugsweise aus einer Zirkonium-Zinn-Legierung, z.B. der unter dem Handelsnamen Zircaloy 2 und Zircaloy 4 bekannten, auf Zirkonium basierenden Legierungen, deren Gehalt an Legierungssubstanzen in den Grenzen von 1,2-1,7% für Zinn, 0,07-0,24% für Eisen, 0,05-0,15% für Chrom, 0-0,08% für Nickel, 0,09-0,16% für Sauerstoff liegt. Der Rest besteht aus Zirkonium und in Zirkoniumschwamm von Reaktorqualität normalerweise vorkommenden Verunreinigungen. Zircaloy 2 enthält 1,2-1,7% Zinn, 0,07-0,20% Eisen, 0,05-0,15% Chrom, 0,03-0,08% Nickel und 0,09-0,16% Sauerstoff. Zircaloy 4 enthält 1,2-1,7% Zinn, 0,18-0,24% Eisen, 0,07-0,13% Chrom und 0,09-0,16% Sauerstoff. Bei allen hier genannten Prozentsätzen handelt es sich um Gewichtsprozente. Bei dem Kernbrennstoff des Brennstabes handelt es sich vorzugsweise um Urandioxyd.

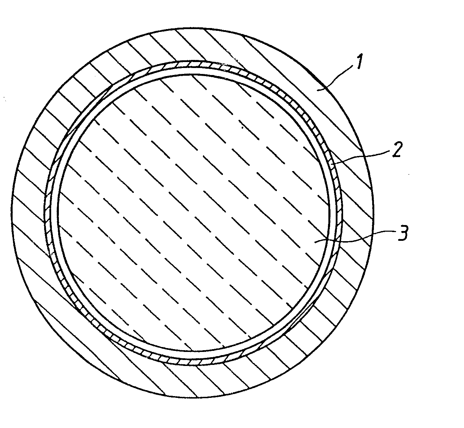

Anhand des in der Figur gezeigten Ausführungsbeispiels soll die Erfindung näher erläutert werden. Die Figur zeigt einen Querschnitt durch einen Brennstab gemäss der Erfindung für einen leichtwassermoderierten Reaktor. 0,5 Gewichtsteile Zinn werden mit 99,5 Gewichtsteilen kommerziellem Zirkoniumschwamm von Reaktorqualität in der eingangs angegebenen Zusammensetzung gemischt. Ein Rohr mit einer Wandstärke von 1,25 mm und einem Aussendurchmesser von 44 mm wird aus der geschmolzenen Mischung hergestellt. Das Rohr wird in einem Rohr aus Zircaloy 2 mit einer Wandstärke von 10 mm und einem Innendurchmesser von 45 mm angeordnet. Die beiden Rohre werden an ihren Endflächen miteinander verschweisst. Das so gewonnene zusammengesetzte Rohr wird stranggepresst, ohne einer Erwärmung unterzogen zu werden. Danach wird das stranggepresste Produkt in mehreren Stufen mit zwischenzeitlich stattfindenden Rekristallisationsglühungen bei ca. 650° Grad C und einer Endglühung nach dem letzten Walzvorgang bei ca. 525° Grad C kaltgewalzt, wobei man ein in der Figur dargestelltes rohrförmiges Endprodukt erhält, das aus einer Schicht 1 aus Zircaloy 2 mit einer Dicke von 0,73 mm und einem Innendurchmesser von 10,65 mm und aus einer 0,07 mm dicken Schicht 2 aus Zirkonium mit einlegiertem Zinn besteht. In der Figur ist auch der Kernbrennstoff dargestellt, der aus kreiszylindrischen Tabletten 3 aus Urandioxyd besteht, die in Längsrichtung der Brennstoffhülle aufeinandergestapelt sind.

Bei Korrosionsproben, welche die bei Reaktorbetrieb herrschenden Bedingungen gut simulieren, weist die innere Schicht der Brennstoffhülle gemäss der vorliegenden Erfindung eine Gewichtszunahme auf, die kleiner als 30% der Gewichtszunahme ist, die eine entsprechende innere Schicht aufweist, die kein einlegiertes Zinn enthält.

Der Brennstab nach der Erfindung ist vorzugsweise für Reaktoren mit Wasser als Kühlmittel bestimmt.

**Patentansprüche**

1. Brennstab für einen Kernreaktor mit einer Brennstoffhülle (1) aus einer auf Zirkonium basierenden Legierung, auf deren Innenfläche eine im wesentlichen aus Zirkonium bestehende Schicht (2) aufgebracht ist und in der Kernbrennstoff (3) untergebracht ist, dadurch gekennzeichnet, dass das Zirkonium in der Schicht (2) 0,1-1 Gew.% Zinn enthält und dass der Gesamtgehalt der übrigen in der Zirkoniumschicht (2) enthaltenen Fremdsubstanzen weniger als 0,5 Gew.% beträgt.

2. Brennstab nach Anspruch 1, dadurch gekennzeichnet, dass die übrigen in der Zirkoniumschicht enthaltenen Fremdsubstanzen aus in Zirkoniumschwamm von Reaktorqualität normalerweise vorkommenden Verunreinigungen bestehen.

3. Brennstab nach Anspruch 1 oder 2, dadurch gekennzeichnet, dass die auf Zirkonium basierende Legierung 1,2-1,7 Gew.% Zinn, 0,07-0,24 Gew.% Eisen, 0,05-0,15 Gew.% Chrom, 0-0,08 Gew.% Nickel und 0,09-0,16 Gew.% Sauerstoff enthält und dass der Rest aus Zirkonium und in Zirkoniumschwamm von Reaktorqualität normalerweise vorkommenden Verunreinigungen besteht.

**Claims**

1. Fuel rod for a nuclear reactor comprising a cladding tube (1) of a zirconium-based alloy the inner surface of which is provided with a layer (2) consisting essentially of zirconium and with nuclear fuel (3) accommodated in said cladding tube, characterized in that the zirconium of said layer (2) contains 0.1 to 1% by weight of tin and that the total content of other foreign substances in said zirconium layer (2) is less than 0.5% by weight.

2. Fuel rod according to Claim 1, characterized in that the other foreign substances included in the zirconium layer consist of impurities normally present in reactor grade sponge zirconium.

3. Fuel rod according to Claim 1 or 2, characterized in that the zirconium-based alloy contains 1.2 to 1.7% by weight of tin, 0.07 to 0.24% by weight of iron, 0.05 to 0.15% by weight of chromium, 0 to 0.08% by weight of pickel and 0.09 to 0.16% by weight of oxygen, and that the rest consists of zirconium and impurities normally present in reactor grade sponge zirconium.

## Revendications

1. Crayon combustible de réacteur nucléaire, comprenant une gaine de matière combustible (1) en un alliage à base de zirconium, sur la surface de laquelle est déposée une couche (2) constituée, pour l'essentiel, de zirconium, et dans laquelle est logée une matière combustible nucléaire (3), caractérisé en ce que le zirconium de la couche (2) contient de 0,1 à 1% en poids d'étain, et en ce que la teneur totale des autres substances étrangères contenues dans la couche de zirconium (2) est inférieure à 0,5% en poids.

2. Crayon combustible suivant la revendication 1, caractérisé en ce que les autres substances étrangères contenues dans la couche de zirconium sont constituées d'impuretés se trouvant normalement dans de l'éponge de zirconium de qualité pour réacteurs.

3. Crayon combustible suivant la revendication 1 ou 2, caractérisé en ce que l'alliage à base de zirconium contient de 1,2 à 1,7% en poids d'étain, de 0,07 à 0,24% en poids de fer, de 0,05 à 0,15% en poids de chrome, de 0 à 0,08% en poids de nickel et de 0,09 à 0,16% en poids d'oxygène, et en ce que le reste est constitué de zirconium et d'impuretés présentes normalement dans l'éponge de zirconium de qualité pour réacteurs.